# EUROPEAN PATENT SPECIFICATION

(11) **EP 0 886 770 B1**
(45) Date of publication and mention of the grant of the patent: **02.05.2002**
(21) Application number: 97909355.6
(22) Date of filing: 26.09.1997
(51) Int. Cl.: G01N 3/30

(54) **SPLIT HOPKINSON BAR TESTING APPARATUS**
HOPKINSON-SPALTSTAB TESTVORRICHTUNG
APPAREIL D'ESSAI DE BARRE DE HOPKINSON EN DEUX PIECES

(30) Priority: 12.12.1996 EP 96309085
(43) Date of publication of application: 30.12.1998
(73) Proprietor: European Community, 2920 Luxembourg (LU)
(72) Inventor: ALBERTINI, Carlo, I-21027 Ispra (IT); LABIBES, Kamel, I-21021 Angora (IT)
(74) Representative: Skerrett, John Norton Haigh
(86) International application number: EP9705435
(87) International publication number: WO9826274

(56) References cited:
- EP-A- 0 410 370
- US-A- 4 159 039
- HAMDAN S ET AL: "A crossbow system for high-strain-rate mechanical testing" MEASUREMENT SCIENCE & TECHNOLOGY, JULY 1996, IOP PUBLISHING, UK, vol. 7, no. 7, ISSN 0957-0233, pages 1068-1072, XP000632368
- STAAB G H ET AL: "A direct-tension split Hopkinson bar for high strain-rate testing" EXPERIMENTAL MECHANICS, SEPT. 1991, USA, vol. 31, no. 3, ISSN 0014-4851, pages 232-235, XP000672536
- LINDHOLM U S: "SOME EXPERIMENTS WITH THE SPLIT HOPKINSON PRESSURE BAR" JOURNAL OF THE MECHANICS AND PHYSICS OF SOLIDS, vol. 12, 1964, pages 317-335, XP000618916

## Description

This invention relates to improvements in or relating to specimen testing apparatus such as that known as Hopkinson bar testing apparatus.

The use of a pressure bar such as a Hopkinson bar is well known to obtain information regarding, for example, the dynamic mechanical properties of a specimen of material placed in compression. In particular, a split Hopkinson pressure bar (SHPB) has been utilised for different case studies on the dynamic mechanical behaviour of materials. Where a study of a specimen of the material in compression is required, using a split Hopkinson pressure bar, conventionally, a compression wave is generated in the input bar by means of a cylindrical projectile fired from a gas gun to impact one end of the input bar, the other end of the input bar being connected by the specimen under test to the output bar from which information can be gathered by sensors in a well known way. Developments in this area have lead to a so-called "Crossbow" system for high-strain-rate mechanical testing and for further information on this technique the reader is directed to Meas. Sci. Technol. 7 (No. 7) (1996) 1068-1072.However, it is believed that, at least in some circumstances, the generation of a compression wave, by firing a projectile onto the input end of the impact bar, tends to be disadvantageous more particularly in avoiding imperfect energy transfer at the interface of the forward end of the projectile coming into contact with the input end of the input bar. Other such disadvantages are discussed in an article published by G. H. Staab et al. in Experimental Mechanics 31 (No. 3) (1991) 232-235. Theoretically, the projectile and bar should be perfectly parallel at the moment of impact with particular attention being given to guidance of the projectile inside the delivery gas gun. Additionally, the contact surfaces of the projectile and input bar at the interface need to be mechanically treated in order to preserve substantial contact between the entire front surface of the projectile and the input surface of the input bar at the moment of impact. Thus, in practice, in order to avoid energy transfer problems that can occur at the interface between the projectile and the input bar, a certain criticality of construction is required that does not allow much room for tolerance. Additionally, where a specimen of material is of increased diameter or size there will be a need to increase the diameter of the projectile with consequent modifications being needed to the gas gun to deliver such a projectile or replacement of the gun by a larger one.

It is an object of the present invention to provide apparatus for generating a compression wave or pulse in an input bar or member of a Hopkinson or pressure bar system, which apparatus at least alleviates one or more of the aforementioned, or other, problems associated with compression wave generation apparatus.

According to the present invention there is provided Split Hopkinson pressure bar apparatus capable of generating a compression wave or pulse in an input bar or member, said apparatus comprising an input bar or member, actuator means, a fragile or frangible component and an impactor bar or member held, in use, adjacent one end of the input bar or member and supported to resist movement in a direction away from the input bar/member when the impactor bar/member is pre-loaded in said direction by the actuator means, the apparatus being such that, in use, the pre-load force can be quelled suddenly by rupture of the fragile or frangible component, so that the impactor bar/member is released into impact or energy transfer with the input bar/member thereby transmitting a compression wave or pulse through the input bar to a specimen under test.

The actuator means may be any convenient means such as a hydraulic or pneumatic actuator.

Where a fragile or frangible component is provided in an impactor bar/member as aforementioned, said member is, preferably, arranged to rupture at a particular pre-set value of the preload force provided by the actuator means.

In one embodiment of the present invention, the impactor bar/member is guided and held adjacent an input end of the input bar/member (and remains adjacent the input bar during application of the preload force), preferably by means of a collar connected to one end of said impactor bar/member. In use, the collar receives the input end of the input bar and holds same adjacent the impact end of the impactor bar/member; said collar may be welded to the end of the impactor bar/member and/or may be cylindrical. Preferably, the internal diameter or dimension of the collar closely matches the external diameter or dimension of the input bar which in turn matches the diameter or dimension of the impactor bar. A blocking system or fixed support may be provided at the rear of the collar surrounding the impactor bar/member thereby resisting or preventing movement of the impactor bar in said direction on the application of the preload force. Thus, no preload force is exerted on the input bar in said direction when said preload force is applied to the inpactor bar/member.

Usually, the input bar will be connected to an output bar via the specimen to be placed under a compression test.

Further according to the present invention there is provided a method of inducing or generating a compression wave or pulse in an input bar or member of a split Hopkinson pressure bar system, the method comprising pre-loading an impactor bar or member that is held, in use adjacent to an end of the input bar and supported so as to resist movement in a direction away from said input bar and suddenly removing the preload force by rupturing a fragile or frangible component of the impactor bar/member thereby releasing the impactor bar/member into impact or energy transfer with the impactor bar/member, thus transmitting a compression wave through the input bar to a specimen under test.
Further advantageous apparatus and method features of the present invention will be apparent from the following description and drawings.

An embodiment of compression wave generation apparatus for generating a compression wave in a split Hopkinson bar will now be described, by way of example only, with reference to the accompanying very much simplified diagrammatic drawings in which:
FIGURE 1 shows a longitudinal view of prior art compression wave generation apparatus and split Hopkinson pressure bar, and
FIGURE 2 shows a compression wave generation apparatus and a split Hopkinson pressure bar in accordance with the present invention.

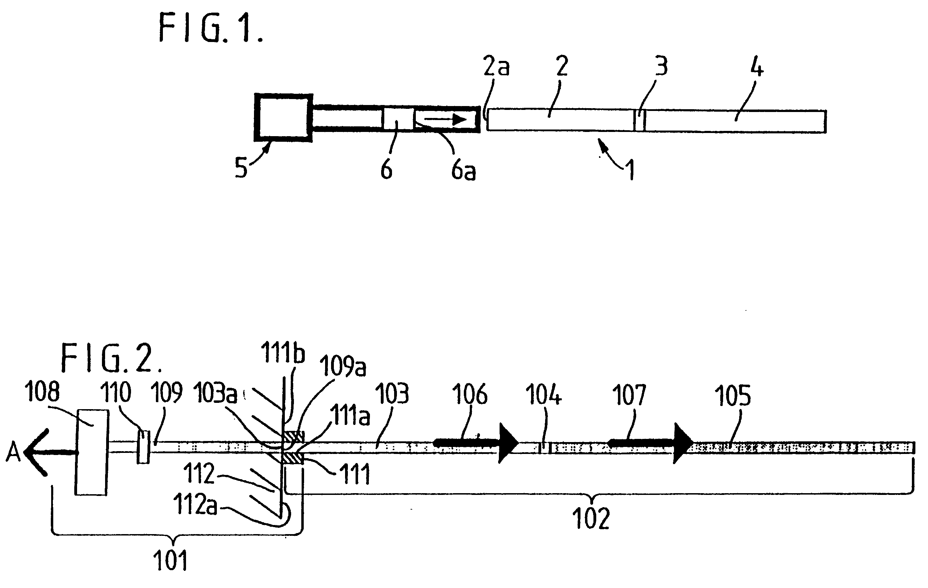

FIGURE 1 of the drawings shows schematically a known arrangement for generating a compression wave in a split Hopkinson pressure bar 1, comprising an input bar or member 2 connected via a specimen under test 3 to an output bar or member 4. A gas gun 5 is arranged to fire a suitable projectile 6 into impact with the free end 2a of the input bar 2 in a manner which should be self-evident from FIGURE 1. Thus, the projectile generates a compression wave in the input bar 2 and hence to the specimen 3 when the front end 6a of the projectile interfaces with the end 2a of the input bar. In the example shown, the input and output bars 2,4 are a cylindrical section of similar section to that of the projectile 6.

As previously mentioned in this specification there is an interface problem in the described arrangement between the forward surface 6a of the projectile and impacted surface 2a of the input bar which can give rise to significant difficulties. In order to minimise interface problems the projectile and bar should be perfectly parallel at impact and the guidance surfaces inside the gun need to be smooth and the surfaces 6a and 2a need to be smooth and mechanically treated so that substantially the whole of the surface 6a will contact the whole of the surface 2a at impact.

FIGURE 2 shows, in accordance with the present invention, compression wave generation apparatus 101 to the left of a split Hopkinson pressure bar 102. The split Hopkinson pressure bar comprises an input bar 103 connected via specimen 104, (to be tested in compression) to an output bar 105. The large arrows 106 and 107 represent the direction of a compression wave generated throughout the Hopkinson bar 102. The compression wave generation apparatus 101 has a hydraulic actuator 108 (the form of actuator could be any convenient means for example pneumatic rather than hydraulic operation) that in use induces a preload (represented by arrow A) force on an impactor bar or member 109, the right-hand end 109a of which is positioned adjacent the input or impact end 103a of the input bar 103. A fragile or frangible component 110 is provided along the length of the impactor bar 109, said frangile member being arranged to rupture at a particular value of the preload force provided by the actuator. The forward end 109a of the impactor 109 is guided and held adjacent the end 103a of the input bar 103 by means of a cylindrical collar 111 welded to said end 109a of the impactor 109. The internal diameter 111a of the collar 111 closely matches the diameter of the input bar 103 which in turn matches the diameter of the impactor bar 109 in a manner which should be evident from the drawings.

A blocking system or fixed support 112 is provided at the rear of the collar 111 surrounding the impactor bar 109 thereby resisting or preventing movement of the impactor bar 109 to the left of the support 112 on application of the preload force in the direction of arrow "A" by the hydraulic actuator 108. Under a preload force the rear face 111b of the collar 111 is urged tightly against the front face 112a of the blocking system 112 in such a manner that no preload force will be exerted on the input bar 103 in the direction of arrow "A". However, once the preload force reaches a known preset level, the fragile member 110 will rupture and the action force in the impactor bar will cause an impact at the interface between the impact surface 109a of the impactor bar and the input end 103a of the input bar 103 in a manner which should be self-evident. Furthermore, the impact will result in a compressive stress wave of precisely known amplitude and duration to be generated through the input bar 103, the specimen 104 and the output bar 107. Thus, the compression wave generation apparatus relies on the principle of storing elastic potential energy in the preloaded static impactor bar and then suddenly releasing that energy (for example by rupturing of a fragile member in the impactor bar) so that the impactor bar impacts the input bar. Thus, the aforedescribed invention in relation to FIGURE 2 of the drawings avoids problems with the prior art arrangement discussed in relation to FIGURE 1 owing to the unique continuous bar system 109,103 being divided into an impactor and an impacted system by the welded cylinder blocking system. The contact achieved by the impactor bar 109 and the input or impacted bar is nearly perfect and effectively the pulse generation propagates through the entire system without any noticeable pertubations unlike the arrangement described in relation to FIGURE 1.

In the arrangement as described in relation to FIGURE 1, if the diameter of the input bar is increased in order to test a larger specimen, the diameter of the projectile 6 necessarily needs to be increased so that the gun 5 will need modification or replacement by a gun able to deliver a larger projectile. However, in the arrangement as shown in the present invention in relation to FIGURE 2, a larger diameter specimen can be tested much more easily simply by increasing the diameter of the input and output bars and impactor bar accordingly. The same actuator means 108 can be used.

Furthermore, it is also possible to change relatively easily the geometry of the Hopkinson bar to give, for example, a rectangular or square section of bar where required. In such a circumstance complex modifications would have to be made to a gas gun to send an appropriately sized projectile of similar section into impact with such a bar.

The apparatus in accordance with the present invention could be used for dynamic mechanical characterisation of concrete where three types of test specimen are generally used namely tubes, cylinders and prisms. Cylinders are used as the standard specimen in the United States, Canada and New Zealand whereas cube shapes are generally used in European countries.

It is to be noted that, in the arrangement shown in FIGURE 2, the length of the preloaded bar 109 can be increased up to several meters, in order to increase the length of the compression pulse without problems of vibration or guidance as will be the case with the arrangement shown in FIGURE 1 with a projectile inside a gun. Therefore, the arrangement shown in FIGURE 2 has an additional advantage over the arrangement shown in FIGURE 1 in that the length of the compression pulse can be increased up to several meters without such vibrational problems.

It is to be understood that the scope of the present invention is as defined by the attached claims.

## Claims

1. Split Hopkinson pressure bar apparatus capable of generating a compression wave or pulse in an input bar or member, the apparatus comprising an input bar or member, actuator means, a fragile or frangible component and an impactor bar or member held, in use, adjacent one end of the input bar or member and supported to resist movement in a direction away from the input bar/member when the impactor bar/member is pre-loaded in the direction by the actuator means, the apparatus being such that, in use, the pre-load force can be quelled suddenly by rupture of the fragile or frangible component, so that the impactor bar/member is released into impact or energy transfer with the input bar/member thereby transmitting a compression wave or pulse through the input bar to a specimen under test.

2. Apparatus as claimed in Claim 1 in which the actuator means is either a hydraulic or pneumatic actuator.

3. Apparatus as claimed in Claim 1 or Claim 2 in which the fragile or frangible component is provided in the impactor bar.

4. Apparatus as claimed in any one of the preceding claims in which the fragile or frangible component is arranged to rupture at a particular pre-set value of the preload force provided by the actuator means.

5. Apparatus as claimed in any one of the preceding claims in which the impactor bar/member is guided and held adjacent an input end of the input bar/member.

6. Apparatus as claimed in Claim 5 in which a collar is connected to one end of said impactor bar/member.

7. Apparatus as claimed in Claim 6 in which the collar receives the input end of the input bar and holds same adjacent the impact end of the impactor bar/member.

8. Apparatus as claimed in Claim 6 or Claim 7 in which the collar is welded to the end of the impactor bar/member and/or is cylindrical.

9. Apparatus as claimed in anyone of Claims 6 to 8 in which the internal diameter or dimension of the collar closely matches the external diameter or dimension of the input bar which in turn matches the diameter or dimension of the impactor bar.

10. Apparatus as claimed in any one of claims 6 to 9 in which a blocking system or fixed support is provided at the rear of the collar surrounding the impactor bar/member thereby resisting or preventing movement of the impactor bar in said direction on the application of the preload force.

11. Apparatus as claimed in any one of the preceding claims in which the input bar is connected to an output bar via the specimen to be placed under a compression test.

12. A method of inducing or generating a compression wave or pulse in an input bar or member of a split Hopkinson pressure bar system, the method comprising pre-loading an impactor bar or member that is held, in use adjacent to an end of the input bar and supported so as to resist movement in a direction away from said input bar and suddenly removing the preload force by rupturing a fragile or frangible component of the impactor bar/member thereby releasing the impactor bar/member into impact or energy transfer with the impactor bar/member, thus transmitting a compression wave through the input bar to a specimen under test.

## Patentansprüche

1. , Hopkinson Spaltdruckstab-Vorrichtung, welche zum Erzeugen einer Druckwelle oder eines Stosses in einem Eingangsstab oder -körper geeignet ist, wobei die Vorrichtung einen Eingangsstab oder -körper, eine Betätigungeinrichtung, eine brüchige oder zerbrechliche Komponente und einen Aufprallstab oder -körper umfasst, welcher im Gebrauch neben einem Ende des Eingangsstabes oder -körpers gehalten und derart abgestützt ist, dass er einer Bewegung in einer Richtung weg von dem Eingangsstab/-körper widersteht, wenn der Aufprallstab/-körper in der Richtung mittels der Betätigungseinrichtung vorbelastet wird, wobei die Vorrichtung derart ausgebildet ist, dass beim Gebrauch die Vorspannkraft durch Reissen der brüchigen oder zerbrechlichen Komponente plötzlich überwunden werden kann, so dass der Aufprallstab/-körper für einen Stoss oder eine Energieübertragung mit dem Eingangsstab/-körper freigegeben wird, wodurch eine Druckwelle oder ein Stoss durch den Eingangsstab auf eine zu prüfende Probe übertragen wird.

2. Vorrichtung nach Anspruch 1, **dadurch gekennzeichnet, dass** die Betätigungseinrichtung entweder eine hydraulische oder eine pneumatische Betätigungseinrichtung ist.

3. Vorrichtung nach Anspruch 1 oder 2, **dadurch gekennzeichnet, dass** die brüchige oder zerbrechliche Komponente in dem Aufprallstab vorgesehen ist.

4. Vorrichtung nach einem der vorhergehenden Ansprüche, **dadurch gekennzeichnet, dass** die brüchige oder zerbrechliche Komponente derart angeordnet ist, dass sie bei einem bestimmten, festgelegten Wert der durch die Betätigungsehnrichtung aufgebrachten Vorspannkraft zerbricht.

5. Vorrichtung nach einem der vorhergehenden Ansprüche, **dadurch gekennzeichnet, dass** der Aufprallstab/-körper geführt und nahe einem Eingangsende des Eingangsstabes/-körpers gehalten ist.

6. Vorrichtung nach Anspruch 5, **dadurch gekennzeichnet, dass** ein Kranz mit einem Ende des Aufprallstabes/-körpers verbunden ist.

7. Vorrichtung nach Anspruch 6, **dadurch gekennzeichnet, dass** der Kranz das Eingangsende des Eingangsstabes aufnimmt und dasselbe nahe dem Aufprallende des Aufprallstabes/-körpers hält.

8. Vorrichtung nach Anspruch 6 oder 7, **dadurch gekennzeichnet, dass** der Kranz auf das Ende des Aufprallstabes/-körpers geschweisst und/oder zylindrisch ausgebildet ist.

9. Vorrichtung nach einem der Ansprüche 6 - 8, **dadurch gekennzeichnet, dass** der Innendurchmesser oder die Innenabmessung des Kranzes eng an den Aussendurchmesser oder die Aussenabmessung des Eingangsstabes angepasst ist, welcher umgekehrt mit dem Durchmesser oder der Abmessung des Aufprallstabes zusammenpasst.

10. Vorrichtung nach einem der Ansprüche 6 - 9, **dadurch gekennzeichnet, dass** ein Blockiersystem oder eine fixierte Abstützung auf der Rückseite des den Aufprallstab/-körper umgebenden Kranzes vorgesehen ist, wodurch einer Bewegung des Aufprallstabes in Richtung der Aufbringung der Vorspannkraft widerstanden werden kann oder eine solche Bewegung verhindert ist.

11. Vorrichtung nach einem der vorhergehenden Ansprüche, **dadurch gekennzeichnet, dass** der Eingangsstab mit einem Ausgangsstab über die einer Druckprüfung zu unterziehenden Probe verbunden ist.

12. Verfahren zum Einleiten oder Erzeugen einer Druckwelle oder eines Stosses in einem Eingangsstab oder -körper eines Hopkinson-Spaltdruckstabsystems, welches Verfahren ein Vorbelasten eines Aufprallstabes oder -körpers, welcher beim Gebrauch nahe einem Ende des Eingangsstabes gehalten und derart abgestützt ist, dass er einer Bewegung in einer Richtung weg von dem Eingangsstab widersteht, und ein plötzliches Beseitigen der Vorspannkraft durch ein Zerreissen einer brüchigen oder zerbrechlichen Komponente des Aufprallstabes/-körpers umfasst, wodurch der Aufprallstab/-körper zu einem Stoss oder zu einer Energieübertragung mit dem Aufprallstab/-körper freigegeben wird, um dadurch eine Druckwelle durch den Eingangsstab auf eine zu untersuchende Probe zu übertragen.

## Revendications

1. Dispositif à barre de pression de Hopkinson en deux parties apte à générer une onde ou une impulsion de compression dans une barre ou un élément d'entrée, le dispositif comprenant une barre ou un élément d'entrée, des moyens actionneurs, un composant fragile ou cassant et une barre ou un élément à choquer tenus, en utilisation, de façon adjacente à une extrémité de la barre ou de l'élément d'entrée et qui sont supportés pour résister à un déplacement suivant une direction à l'écart de la barre ou de l'élément d'entrée lorsque la barre ou l'élément à choquer sont pré-chargés suivant cette direction par les moyens actionneurs, le dispositif étant tel, en utilisation, que la force de pré-charge peut être modérée soudainement par la rupture du composant fragile ou cassant, de sorte que la barre ou l'élément à choquer sont libérés lors d'un transfert de choc ou d'énergie avec la barre ou de l'élément d'entrée, en transmettant, de la sorte, une onde ou une impulsion de compression à travers la barre d'entrée jusqu'à un spécimen faisant l'objet d'un test.

2. Dispositif selon la revendication 1, dans lequel les moyens actionneurs sont un actionneur, soit hydraulique, soit pneumatique.

3. Dispositif selon la revendication 1 ou 2, dans lequel le composant fragile ou cassant est disposé dans la barre à choquer.

4. Dispositif selon l'une quelconque des revendications précédentes, dans lequel le composant fragile ou cassant est configuré pour se rompre à une valeur pré-fixée particulière de la force de pré-charge délivrée par les moyens actionneurs.

5. Dispositif selon l'une quelconque des revendications précédentes, dans lequel la barre ou l'élément à choquer sont guidés et tenus de façon adjacente à une extrémité d'entrée de la barre ou de l'élément d'entrée.

6. Dispositif selon la revendication 5, dans lequel un collier est raccordé à une extrémité de la dite barre ou du dit élément à choquer.

7. Dispositif selon la revendication 6, dans lequel le collier reçoit l'extrémité d'entrée de la barre d'entrée et tient celle-ci de façon adjacente à l'extrémité, soumise au choc, de la barre ou l'élément à choquer.

8. Dispositif selon la revendication 6 ou 7, dans lequel le collier est soudé à l'extrémité de la barre ou l'élément à choquer et/ou est cylindrique.

9. Dispositif selon l'une quelconque des revendications 6 à 8, dans lequel le diamètre ou la dimension interne du collier correspond étroitement au diamètre ou à la dimension externe de la barre d'entrée qui, à son tour, correspond au diamètre ou à la dimension de la barre à choquer.

10. Dispositif selon l'une quelconque des revendications 6 à 9, dans lequel un système de blocage ou un support fixe sont disposés à l'arrière du collier entourant la barre ou l'élément à choquer, en résistant ou en empêchant, de la sorte, le déplacement de la barre à choquer suivant la dite direction lors de l'application de la force de pré-charge.

11. Dispositif selon l'une quelconque des revendications précédentes, dans lequel la barre d'entrée est raccordée à une barre de sortie par l'intermédiaire du spécimen qui est destiné à être soumis à un test de compression.

12. Procédé pour induire ou générer une onde ou une impulsion de compression dans une barre ou un élément d'entrée d'un système à barre de pression de Hopkinson en deux parties, le procédé comprenant la pré-charge d'une barre ou d'un élément à choquer tenus, en utilisation, de façon adjacente à une extrémité de la barre d'entrée et qui sont supportés de manière à résister à un déplacement suivant une direction à l'écart de la dite barre d'entrée et le retrait soudain de la force de pré-charge par la rupture d'un composant fragile ou cassant de la barre ou l'élément à choquer, en libérant, de la sorte, la barre ou de l'élément à choquer lors d'un transfert de choc ou d'énergie avec la barre ou de l'élément à choquer, en transmettant, de la sorte, une onde de compression à travers la barre d'entrée jusqu'à un spécimen qui est soumis à un test.
